# EUROPÄISCHE PATENTSCHRIFT

(11) **EP 2 697 678 B1**
(45) Veröffentlichungstag und Bekanntmachung des Hinweises auf die Patenterteilung: **11.12.2019**
(21) Anmeldenummer: 12714681.9
(22) Anmeldetag: 11.04.2012
(51) Int. Cl.: G02B 21/08, G02B 21/12, G02B 21/16, G01N 21/64, G02B 21/36

(54) **WEITFELD-MIKROSKOP-BELEUCHTUNGSSYSTEM UND WEITFELD-BELEUCHTUNGSVERFAHREN**
WIDE-FIELD MICROSCOPE ILLUMINATION SYSTEM AND WIDE-FIELD ILLUMINATION METHOD
SYSTÈME D'ÉCLAIRAGE DE MICROSCOPE À CHAMP LARGE ET PROCÉDÉ D'ÉCLAIRAGE DE MICROSCOPE À CHAMP LARGE

(30) Priorität: 15.04.2011 DE 102011017078
(43) Veröffentlichungstag der Anmeldung: 19.02.2014
(73) Patentinhaber: Leica Microsystems CMS GmbH, 35578 Wetzlar (DE)
(72) Erfinder: FÖLLING, Jonas, 69115 Heidelberg (DE)
(74) Vertreter: m patent group
(86) Internationale Anmeldenummer: PCT/EP2012/056579
(87) Internationale Veröffentlichungsnummer: WO 2012/140083

(56) Entgegenhaltungen:
- EP-A2- 1 857 853
- WO-A1-2005/031429
- WO-A1-2009/149178
- DE-A1-102006 028 530
- DE-A1-102008 059 328
- DE-A1-102009 037 366
- US-A1- 2003 021 035

## Beschreibung

Die Erfindung betrifft ein Weitfeld-Mikroskop-Beleuchtungssystem mit einem Mikroskopobjektiv, welches eine optische Objektivachse aufweist, wobei das Beleuchtungslicht durch das Objektiv auf eine mit einem Mikroskop betrachtete Probe gesendet wird, sowie ein entsprechendes Beleuchtungsverfahren.

In jüngerer Vergangenheit wurden lichtmikroskopische Verfahren entwickelt, mit denen sich basierend auf einer sequentiellen, stochastischen Lokalisierung von einzelnen Punktobjekten, insbesondere Fluoreszenzmolekülen, Bildstrukturen darstellen lassen, die kleiner sind als die beugungsbedingte Auflösungsgrenze klassischer Lichtmikroskope. Solche Verfahren sind beispielsweise beschrieben in WO 2006/127692 A2; DE 10 2006 021 317 B3; WO 2007/128434 A1, US 2009/0134342 A1; DE 10 2008 024 568 A1; "Sub-diffraction-limit imaging by stochastic optical reconstruction microscopy (STORM)", Nature Methods 3, 793-796 (2006), M. J. Rust, M. Bates, X. Zhuang; "Resolution of Lambda/10 in fluorescence microscopy using fast single molecule photo-switching", Geisler C. et al, Appl. Phys. A, 88, 223-226 (2007). Dieser neue Zweig der Mikroskopie wird auch als Lokalisierungsmikroskopie bezeichnet.

Den neuen Verfahren ist gemein, dass die abzubildenden Strukturen mit Markern präpariert werden, die über zwei unterscheidbare Zustände verfügen, nämlich einen "hellen" Zustand und einen "dunklen" Zustand. Werden beispielsweise Fluoreszenzfarbstoffe als Marker verwendet, so ist der helle Zustand ein fluoreszenzfähiger Zustand und der dunkle Zustand ein nicht fluoreszenzfähiger Zustand. Zur Abbildung von Bildstrukturen mit einer Auflösung, die kleiner als die klassische Auflösungsgrenze des abbildenden optischen Systems ist, wird nun wiederholt eine kleine Untermenge der Marker in den hellen Zustand präpariert. Diese Untermenge wird im Folgenden als aktive Untermenge bezeichnet. Die aktive Untermenge ist dabei so zu wählen, dass der mittlere Abstand benachbarter Marker im hellen Zustand größer ist als die Auflösungsgrenze des abbildenden optischen Systems. Die Luminanzsignale der aktiven Untermenge werden auf einen räumlich auflösenden Lichtdetektor, z.B. eine CCD-Kamera, abgebildet. Von jedem Marker wird so ein Lichtfleck erfasst, dessen Größe durch die Auflösungsgrenze des abbildenden optischen Systems bestimmt ist.

Auf diese Weise wird eine Vielzahl von Rohdaten-Einzelbildern aufgenommen, in denen jeweils eine andere aktive Untermenge abgebildet ist. In einem Bildanalyse-Prozess werden dann in jedem Rohdaten-Einzelbild die Schwerpunkte der Lichtflecke bestimmt, welche die im hellen Zustand befindlichen Marker darstellen. Die aus den Rohdaten-Einzelbildern ermittelten Schwerpunkte der Lichtflecke werden dann in einer Gesamtdarstellung zusammengetragen. Das durch diese Gesamtdarstellung entstehende hochaufgelöste Bild spiegelt die Verteilung der Marker wieder. Für eine repräsentative Wiedergabe der abzubildenden Struktur müssen ausreichend viele Signale detektiert werden. Da jedoch die Anzahl an Markern in der jeweils aktiven Untermenge durch den minimalen mittleren Abstand, den zwei Marker im hellen Zustand voneinander haben dürfen, limitiert ist, müssen sehr viele Rohdaten-Einzelbilder aufgenommen werden, um die Struktur vollständig abzubilden. Typischerweise liegt die Anzahl an Rohdaten-Einzelbildern in einem Bereich von 10.000 bis 100.000.

Die für die Aufnahme eines Rohdaten-Einzelbildes benötigte Zeit ist nach unten hin durch die maximale Bildaufnahmerate des abbildenden Detektors limitiert. Dies führt zu vergleichsweise langen Gesamtaufnahmezeiten für eine für die Gesamtdarstellung benötigte Serie von Rohdaten-Einzelbildern. So kann die Gesamtaufnahmezeit bis zu einigen Stunden betragen.

Um die gesamte Aufnahmezeit möglichst zu reduzieren und so kurz wie möglich zu halten, muss die Aufnahmezeit eines jeden Einzelrohdatenbildes so kurz wie möglich gehalten werden. Dazu ist es nötig, dass die einzelnen Lichtflecke, die die Marker erzeugen, sehr schnell entstehen, wobei sie natürlich zwecks guter Lokalisierung dennoch hell sein müssen. Das bedeutet, dass die Marker, wenn sie im aktiven Zustand befindlich sind, sehr schnell sehr viele Photonen aussenden, bevor sie wieder in den inaktiven Zustand übergehen. Wird nun die Aufnahmezeit der Einzelrohdatenbilder entsprechend auf die mittlere Leuchtdauer der Marker angepasst, ergibt sich eine schnellstmögliche Aufnahme. Typische Marker sind (schaltbare oder nichtschaltbare) fluoreszierende Moleküle. Diese senden in einem gewissen Zeitraum umso mehr Photonen aus, je mehr Photonen Anregungslicht sie erfassen. Daher ist es nötig, die Moleküle mit hohen Lichtintensitäten zu bestrahlen. Nur so lässt sich eine schnellstmögliche Bildaufnahme ermöglichen.

Hohe Lichtintensitäten sind insbesondere dann von Vorteil, wenn als Marker ganz gewöhnliche, nicht schaltbare Fluoreszenzmoleküle verwendet werden. Diese haben gegenüber speziellen schaltbaren Farbstoffen den Vorteil, im Allgemeinen viel einfacher handhabbar zu sein und bessere Färbeergebnisse zu erzielen. Zudem stehen eine große Anzahl verschiedener Farbstoffe zur Verfügung. Spezielle schaltbare Farbstoffe sind in ihrer Zahl begrenzt und oft nicht einfach in der Handhabung. Der aktive Zustand dieser Standardfarbstoffe entspricht somit dem Molekül in seinem Grundzustand oder ersten angeregten Zustand, auf jeden Fall mit der Möglichkeit Photonen auszusenden. Der inaktive Zustand ist ein Dunkelzustand des Moleküls, wie ihn jedes gewöhnliche Fluoreszenzmolekül zeigt, beispielsweise ein Triplettzustand oder ein reduzierter oder oxidierter Zustand. Das Molekül kann typischerweise mit einer geringen Wahrscheinlichkeit aus dem angeregten Zustand in den Dunkelzustand wechseln und wird nach einer gewissen Zeit automatisch wieder in den Grundzustand übergehen, in welchem es wieder fluoreszieren kann. Durch diese Tatsache zeigt das Molekül ein Blinkverhalten: Es sendet so lange Photonen aus, bis es spontan aus dem angeregten Zustand in den Dunkelzustand übergeht. Diese Photonen in ihrer Gesamtheit bilden einen Lichtfleck. Das Molekül bleibt nun im Dunkelzustand, bis es spontan wieder in den aktiven Zustand übergeht. In der Zeit des Dunkelzustands sendet das Molekül keine Photonen und damit kein detektierbares Signal aus. Da der Dunkelzustand sehr langlebig sein kann, bei hoher Lichtintensität aber die Lichtflecken sehr schnell entstehen, zeigt sich dieses Verhalten als Blinken. Um unter diesen Umständen einen Zustand zu erreichen, in dem nur vereinzelte Moleküle sichtbar sind, also im aktiven Zustand, muss die Lichtintensität des Anregungslichtes sehr hoch sein. Nur so ist es möglich, dass fast alle Moleküle im inaktiven Zustand befindlich sind, denn sobald sie spontan in den aktiven Zustand wechseln, senden sie durch die hohe Intensität des Anregungslichts bedingt eine schnelle Folge von Photonen aus und verschwinden "blitzartig" wieder. Dadurch sind nur sehr wenige Moleküle gleichzeitig sichtbar. Die hohe Intensität des Anregungslichtes ermöglicht hier also nicht nur eine schnelle Bildaufnahme, sondern ist für das Einstellen eines ausreichend kleinen Verhältnisses aus aktiven zu inaktiven Markern dienlich.

Durch die obigen Erläuterungen ist deutlich geworden, dass eine hohe Lichtleistung in die Probe gebracht werden muss. Die Beleuchtung der Probe erfolgt üblicherweise im sogenannten "Weitfeld"-Verfahren. Das bedeutet, dass eine große Fläche in der Probe möglichst homogen beleuchtet wird, nämlich genau der Bereich, der durch die Abbildungsoptik auf den Detektor abgebildet wird. Die Beleuchtung erfolgt typischerweise durch das gleiche Objektiv, das auch das Fluoreszenzlicht aufsammelt und mittels entsprechender weiterer Optik die Probe auf den Detektor abbildet.

Um einen großen Bereich der Probe möglichst homogen zu beleuchten wird das Licht in die hintere Fokalebene des Objektivs fokussiert. Je nach Größe des Fokus in der hinteren Fokalebene, ergibt sich in der vorderen Fokalebene, also in der Probenebene, die Größe des Ausleuchtungsfeldes. Dabei gilt: Je kleiner der Fokus in der hinteren Fokalebene, desto größer das Ausleuchtungsfeld und andersherum. Um einen entsprechend großen Bereich ausleuchten zu können, wird also das gesamte Anregungslicht als kleiner Lichtstrahl in das Objektiv gelenkt. Dies hat zur Folge, dass in typischen Objektiven das Anregungslicht die Linsen im Objektiv als relativ enges Strahlenbündel durchquert. Dabei gibt es Bereiche im Objektiv, in denen das Strahlenbündel breiter oder schmaler ist. Generell wird typischerweise bei dieser Art der Beleuchtung aber eben nicht die die gesamte Apertur der Linsen ausgenutzt, sondern das Licht passiert die Linsen immer nur in einem sehr dünnen Strahlenbündel. Da generell, wie oben schon geschildert, sehr hohe Lichtleistungen in die Probe eingebracht werden müssen, werden durch das dünne Strahlenbündel im Objektiv extrem hohe Lichtintensitäten erreicht. Zum Erreichen dieser Lichtintensitäten wird für die Weitfeld-Beleuchtung in Lokalisierungsmikroskopen daher oft Laserlicht verwendet.

Kompliziertere Linsen oder Linsensysteme, wie sie in Objektiven auftreten, beinhalten typischerweise verschiedene Materialien, die bei hohen Lichtintensitäten Schaden nehmen können. Typischerweise ist das "schwächste" Glied hier der optische Kitt, mit dem etwa verschiedene Linsenteile miteinander verbunden werden. Jedoch können auch Oberflächenschichten auf den Gläsern der Linsen oder die Gläser selber im Extremfall Schaden nehmen.

Bei steigender "Belastung" der Optik durch die starke Beleuchtung kann es somit zu Schäden in der Optik kommen, die sich unvorteilhaft auf den Strahlengang der Beleuchtung, wie auch der Detektion auswirken können. So können zum Beispiel "blinde Flecke" entstehen, die punktuell das Licht absorbieren, beugen, oder stark streuen. Denkbar sind auch Löcher in den Gläsern, etc. Derartige Schäden können ein Objektiv komplett unbrauchbar machen. Entsteht z.B. ein blinder Fleck genau im Beleuchtungsstrahlengang (wo er durch die Strahlenbelastung vornehmlich entstehen würde), wäre das Objektiv nicht mehr zu verwenden, weil dann kein Licht oder zumindest kein sauberer Beleuchtungsstrahl mehr aus dem Objektiv in Richtung Probe austreten würde. Zudem würden sich derartige Schäden auch negativ auf den Detektionsstrahlengang auswirken, da dieser ebenfalls das Objektiv passiert und das Detektionslicht an den geschädigten Objektivstellen beeinflusst würde, beispielsweise gestreut würde.

Auch wenn es bekannt ist, einfache optische Systeme ohne Kitt herzustellen, werden diese Systeme typischerweise mechanisch anfälliger und instabiler und auch hinsichtlich anderer optischer Eigenschaften sind Nachteile denkbar. Gegenüber der Strahlenbelastung werden diese Systeme jedoch deutlich stabiler, weil der strahlenbelastungsanfällige optische Kitt entfällt. Dennoch ist bei komplizierten optischen Systemen wie speziellen Objektiven eine Herstellung ohne optische Kitte nach heutigen technischen Maßstäben nicht oder nur unter erheblichem Mehraufwand möglich. Es ist somit von größter Wichtigkeit, auch bei verkitteten optischen Systemen derartige Schäden zu verhindern, da sonst die Lebensdauer der Objektive für den praktischen Gebrauch stark begrenzt ist. Dies gilt umso mehr, weil Objektive sehr aufwändige Bauteile und entsprechend teuer sind.

Es stellt sich bei genauerer Betrachtung der Problematik heraus, dass typische Strahlenschäden nach ähnlichem Muster ablaufen: Zumeist ergeben sich die Schäden nicht sofort bei erstmaligem Einschalten des Lichtes. Oftmals verwendet man Lichtleistungen, die die fraglichen optischen Bauteile längere Zeit aushalten. Allerdings kann man häufig eine langsame Abnahme der Transmission der Optik feststellen. Dies ist bei gekitteter Optik vermutlich auf eine Veränderung des Kitts unter Einfluss des Lichts zurückzuführen. Nach einer gewissen Zeit jedoch ist eine kritische Schwelle erreicht und das fragliche Bauteil zeigt an der beleuchteten Stelle eine plötzliche Veränderung in Sekundenbruchteilen, die dazu führen kann, dass das Bauteil an der beleuchteten Stelle und ihrer Umgebung punktuell oder (bei entsprechender Heftigkeit der Reaktion) im Ganzen kein Licht mehr transmittiert oder dieses z.B. stark streut und somit unbrauchbar geworden ist.

Bevor diese plötzliche Veränderung aufgetreten ist, ist höchstens eine marginale Veränderung der optischen Eigenschaft erkennbar, die mit geeigneten und genauen Messmethoden messbar sein kann, aber üblicherweise zu vernachlässigen ist. Bis zu dem plötzlichen Eintreten der Veränderung ist die Optik also ganz normal benutzbar. Die Schädigung bzw. Zerstörung des Objektivs ist daher ein hochgradig nichtlinearer Prozess, was in der nachfolgenden Erfindung ausgenutzt wird.

Es versteht sich, dass das Problem nicht nur bei Lokalisierungsmikroskopen, sondern bei jeder Art von Mikroskopen auftritt, bei welchen eine hohe Beleuchtungslicht-Intensität verwendet wird, welche durch das Objektiv gesendet wird. Auch wenn dies besonders auf Fluoreszenzmikroskope zutrifft, kann dies auch bei Lichtmikroskopen der Fall sein.

Die WO 2005/031429 A1 lehrt, die Eindringtiefe eines evaneszenten Feldes in eine Probe über den Winkel, unter dem Totalreflexion stattfindet, zu ändern. Dieser Winkel lässt sich dadurch variieren, dass der Abstand des Beleuchtungsstrahlenbündels zur optischen Achse in der hinteren Brennebene des Objektivs verstellt wird. Der Abstand zur optischen Achse wird mittels Einstellmittel verändert. Hierbei kann es sich um zwei in unterschiedliche laterale Richtungen bewegliche Galvanometerspiegel handeln.

Die WO 2009/149178 A1 beschreibt ein Bildgebungsverfahren, bei dem eine Probe großflächig beleuchtet wird, wobei zwischen homogener Beleuchtung ("uniform illumination") und strukturierter Beleuchtung ("structured illumination") umgeschaltet wird. Um die genannte homogene bzw. strukturierte Beleuchtung zu realisieren, wird ein sogenannter "pattern generator" bzw. ein "diffuser" eingesetzt. Beispielsweise kann die strukturierte Beleuchtung mittels eines Specklemusters erzielt werden. Durch schnelle zufallsgesteuerte Bewegung des Specklemusters kann dann eine homogene Beleuchtung nachgebildet werden. Alternativ zum Specklemuster kann für die strukturierte Beleuchtung auch ein Gitter- oder ein Schachbrettmuster verwendet werden.

Es ist ein Aufgabe der Erfindung, bei einer Weitfeld-Beleuchtung, welche durch ein Mikroskopobjektiv erfolgt, auch bei hoher Lichtintensität des Beleuchtungslichts eine Schädigung des Objektivs zu verhindern.

Diese Aufgabe wird durch die Gegenstände der unabhängigen Ansprüche gelöst.

Gemäß einem ersten Aspekt der Erfindung wird dies erreicht durch ein Weitfeld-Mikroskop-Beleuchtungssystem mit: einem Mikroskopobjektiv, welches eine optische Objektivachse aufweist; einer Beleuchtungslichtquelle, welche Weitfeld-Beleuchtungslicht längs von Beleuchtungsstrahlengängen mit entsprechenden Beleuchtungsachsen sendet, längs welcher das Beleuchtungslicht durch innerhalb einer vorbestimmten Beleuchtungslicht-Eintrittsfläche liegende Beleuchtungslicht-Eintrittsstellen in das Mikroskopobjektiv eindringt; einem räumlich auflösenden Lichtdetektor, welcher von einer beleuchteten Probe durch das Mikroskopobjektiv entlang eines Detektionslichtstrahlengangs gesendetes Detektionslicht detektiert; und einer von einer Steuerung gesteuerten, automatischen Beleuchtungslichtstrahlengang-Manipulationseinrichtung, welche in Richtung des Beleuchtungslicht-Strahlengangs vor dem Mikroskopobjektiv angeordnet ist und mittels welcher Beleuchtungslichtstrahlengang-Manipulationseinrichtung die Beleuchtungsachsen automatisch in zeitlichen Abständen zu einer Mehrzahl von Beleuchtungslicht-Eintrittsstellen bewegbar ist.

Gemäß einem zweiten Aspekt der Erfindung wird dies erreicht durch Weitfeld-Beleuchtungsverfahren zur Beleuchtung von mit einem Mikroskop betrachteten Proben, wobei das Mikroskop versehen ist mit: einem Mikroskopobjektiv, welches eine optische Objektivachse aufweist; und einer Beleuchtungslichtquelle, welche Weitfeld-Beleuchtungslicht längs von Beleuchtungsstrahlengängen mit entsprechenden Beleuchtungsachsen sendet, längs welcher das Beleuchtungslicht durch innerhalb einer vorbestimmten Beleuchtungslicht-Eintrittsfläche liegende Beleuchtungslicht-Eintrittsstellen in das Mikroskopobjektiv eindringt; wobei das Beleuchtungsverfahren versehen ist mit derartigem wiederholtem, automatischem, parallelem Verstellen der Beleuchtungsachse relativ zur optischen Objektivachse in zeitlichen Abständen, dass ein seitlicher Versatz der Beleuchtungsachse relativ zur Objektivachse automatisch verstellt wird, so dass die Beleuchtungslicht-Eintrittsstelle in derartigen zeitlichen Abständen innerhalb der vorbestimmten Beleuchtungslicht-Eintrittsfläche verstellt wird, dass das Objektiv vor Schädigung durch Beleuchtungslicht geschützt wird.

Gemäß einer bevorzugten Ausführungsform der Erfindung verlaufen die Beleuchtungsachsen stets parallel zur Objektivachse. Auch wenn leicht abweichende Eintrittswinkel in das Objektiv zu einem seitlichen Versatz der Beleuchtung zum Objekt führen, kann dieser entweder vernachlässigbar oder bei bestimmten Sonderanwendungen sogar erwünscht sein. In der Regel wird man aber den Eintrittswinkel zumindest im Wesentlichen parallel zur Objektivachse wählen, zumindest wenn eine Kompensation eines stärkeren seitlichen Versatzes des aus dem Objektiv austretenden Beleuchtungslichts relativ zur Probe vermieden werden soll. In Verfahrensschritten ausgedrückt enthält die bevorzugte Ausführungsform die Schritte paralleles Ausrichten der Beleuchtungsachsen relativ zu der Objektivachse und Beibehalten dieser Parallelität beim automatischen Verstellen des seitlichen Versatzes der Beleuchtungsachse relativ zur Objektivachse.

Gemäß einer bevorzugten Ausführungsform der Erfindung ist das Weitfeld-Mikroskop-Beleuchtungssystem Bestandteil eines Lokalisierungsmikroskops. Diese besondere Anwendung ergibt sich daraus, dass als Beleuchtungslicht relative hohe Lichtintensitäten durch das Objektiv gesendet werden, wobei für den Eintritt des Beleuchtungslichtstrahls in das Objektiv nur ein relativ kleiner Teil der Apertur des Objektivs ausgenutzt wird, d.h. der Strahlquerschnitt relativ klein im Vergleich zur gesamten Eintrittsfläche des Objektivs ist, und unter Umständen (aber nicht zwingend) erst bei Durchlaufen des Objektivs zu einen größeren Strahlquerschnitt kollimiert wird. Allerdings kann die Anwendung auch bei anderen Mikroskopen als Lokalisierungmikroskopen erfolgen, beispielsweise bei Lichtmikroskopen, wenn dort hohe Lichtintensitäten für das Beleuchtungslicht Anwendung finden.

Gemäß einer bevorzugten Ausführungsform der Erfindung ist das Mikroskop-Beleuchtungssystem Bestandteil eines TIRF-Beleuchtungssystems. Dies ist besonders deshalb von Vorteil, weil sich mit dem erfindungsgemäßen Beleuchtungssystem durch relativ einfache Verwirklichung eines seitlichen Versatzes des Beleuchtungslichts relativ zur optischen Objektivachse verschiedene Beleuchtungswinkel in der Objektebene einstellen lassen. Das erfindungsgemäße Verfahren zeichnet sich gemäß einer vorteilhaften Weiterbildung der Erfindung entsprechend dadurch aus, dass ein Auswählen der vorgegebenen Beleuchtungslicht-Eintrittsfläche aus wenigstens zwei unterschiedlichen Beleuchtungslicht-Eintrittsflächen erfolgt, welche unterschiedlichen Beleuchtungsmodi zugeordnet sind, welche vorteilhaft Epifluoreszenzbeleuchtung und TIRF-Beleuchtung sein können. Die Epifluoreszenzbeleuchtung kann dabei auch mit leicht von der optischen Achse abweichenden Winkeln erfolgen, welche Abweichung aber für die Ausleuchtung der Probe zu vernachlässigen sind. Obgleich man in der Praxis mit weitaus kleineren Abweichungen arbeiten kann, wäre selbst eine Abweichung von 30 Grad zur optischen Objektivachse für viele Anwendungen zum Zweck der Ausleuchtung der Probe zu vernachlässigen.

Gemäß einer bevorzugten Ausführungsform der Erfindung weist die Beleuchtungslichtstrahlengang-Manipulationseinrichtung eine Optomechanik, Akustooptische Modulatoren (AOM) oder Elektrooptische Modulatoren (EOM) auf, welche einen verstellbaren Strahlenversatz und somit eine im Verhältnis zu optischen Objektivachse verstellbare Beleuchtungslicht-Eintrittsstelle einstellt. Besonders AOMs und EOMs bieten die Möglichkeit, einen seitlichen Versatz des Beleuchtungslichtstrahlengangs sehr schnell zu bewerkstelligen. Da aber die Objektive schon über einen bestimmten Zeitraum die Strahlenbelastung aushalten, reicht hinsichtlich der Umstellgeschwindigkeit auch eine Optomechanik.

Gemäß Erfindung weist die Steuerung einen Zufallsgenerator auf, welcher einen zugelassenen verstellbaren Strahlenversatz im Bereich der vorbestimmten Beleuchtungslicht-Eintrittsfläche für das Beleuchtungslicht in das Objektiv steuert, wobei alle von der Steuerung zugelassenen Beleuchtungslicht-Eintrittsstellen innerhalb dieser vorbestimmten Beleuchtungslicht-Eintrittsfläche liegen. In Form des erfindungsgemäßen Verfahrens ausgedrückt erfolgt ein zufälliges Auswählen der jeweiligen Beleuchtungslicht-Eintrittsstellen des Beleuchtungslichts innerhalb der vorgegebenen Beleuchtungslicht-Eintrittsfläche und Beibehalten dieser jeweiligen Beleuchtungslicht-Eintrittsstellen über die jeweiligen zeitlichen Abstände bis die jeweilige nächste Beleuchtungslicht-Eintrittsstelle innerhalb der vorgegebenen Beleuchtungslicht-Eintrittsstellen zufällig ausgewählt wird.

Gemäß einer bevorzugten Ausführungsform der Erfindung werden die bereits angefahrenen Beleuchtungslicht-Eintrittsstellen und die darauf gesendete Strahlungsmenge gespeichert. Hieraus lässt sich einerseits für den Benutzer ableiten, wann das Objektiv vermutlich zerstört werden wird, so dass es präventiv gewechselt werden kann. Zudem kann durch diese Informationen die automatische Beleuchtungslicht-Verstelleinrichtung bei einem Wechsel der Beleuchtungslicht-Eindringstellen die neue Beleuchtungslicht-Eindringstelle immer so auswählen, dass diese in einen Bereich fällt, der im Vergleich zu anderen Stellen noch wenig geschädigt wurde. Somit lässt sich eine noch gleichmäßige und dadurch lebensdauerverlängernde Wirkung erreichen, als bei einer rein zufällig gesteuerten Verstellung.

Gemäß einer bevorzugten Ausführungsform der Erfindung ist eine Steuerungs-Schnittstelle vorgesehen, mittels welcher ein die vorbestimmte Beleuchtungslicht-Eintrittsfläche verstellender Steuerbefehl eingebbar ist. Dies kann entweder erfolgen, um einen unterschiedlichen Beleuchtungsmodus einzustellen, welcher mit einer unterschiedlichen vorbestimmten Beleuchtungslicht-Eintrittsfläche einhergeht, oder um weitere Alternativen zur Schonung des Objektivs zu finden, beispielsweise eine weiter von der optischen Achse entfernt liegende Stelle, wenn die der optischen Objektivachse nahen Stellen durch eine zu hohe Strahlenbelastung sozusagen verbraucht sind.

Gemäß einer bevorzugten Ausführungsform der Erfindung ist die vorbestimmte Beleuchtungslicht-Eintrittsfläche eine kreisförmige, kreissegmentförmige, ringförmige oder ringsegmentförmige Fläche. Es kann aber auch jede andere beliebige Fläche, beispielsweise quadratisch, rechteckig oder dreieckförmig gewählt werden.

Gemäß einer bevorzugten Ausführungsform der Erfindung ist eine Messeinrichtung vorgesehen, welche die Transmission des Objektivs überwacht und ein Steuersignal an die Steuerung sendet, wenn die Transmission unter einen vorbestimmten Grenzwert fällt. In anderen Worten wird ein Messen optischer Transmission des Objektivs für die jeweiligen Beleuchtungslicht-Eintrittsstellen vorgenommen und ein Einstellen der zeitlichen Abstände erfolgt entsprechend einer Veränderung der optischen Transmission für die jeweilige Beleuchtungslicht-Eintrittsstelle über der Zeit. Daraus folgt, dass eine Verstellung der Beleuchtungsstrahl-Eintrittsfläche in das Objektiv erst dann erfolgt, wenn die vorherige Stelle sozusagen verbraucht ist. Damit lässt sich die Anzahl der Umstellvorgänge begrenzen. Da allerdings diese Störungen minimal sind und meist gar nicht bemerkt werden, kann die Umstellung auch in vorbestimmten Zeitintervallen erfolgen, oder in durch ein Steuersignal einstellbaren zeitlichen Abständen.

Nachfolgend wird die Erfindung weiter im Detail beschrieben:
Wird nach einer gewissen Beleuchtungszeit, die jedoch unterhalb der Zerstörschwelle der Optik liegt, der Beleuchtungsstrahlengang automatisch an eine in der Nähe befindliche Stelle in der Optik geführt, kann die Zerstörung der Optik an der ersten Stelle abgewendet werden. Die neue Stelle kann nun wieder eine entsprechende Zeit beleuchtet werden, bevor man den Beleuchtungsstrahlengang wieder an eine andere Stelle schiebt. Auf diese Weise werden die zuvor beleuchteten Stellen wie oben beschrieben nur in optisch vernachlässigbarer Weise geschädigt. Je nachdem, welchen Durchmesser der Lichtstrahl hat und wie groß der Bereich der Optik ist, auf dem man den Lichtstrahl verschieben kann, ohne unerwünschte Effekte im weiteren Verlauf des Strahlenganges zu bewirken, kann man sehr viele unterschiedliche Stellen der Optik bis kurz vor die Zerstörschwelle beleuchten. Die Anzahl der möglichen beleuchtbaren Stellen ergibt den Faktor, um den sich die Lebenszeit des Objektivs verlängern lässt.

Wie im obigen Absatz schon angedeutet, ist es üblicherweise nicht in beliebiger Art und Weise möglich, den Strahlengang in der Optik zu verschieben, denn dies hat eine Änderung des Strahlenganges im nachfolgenden Bereich zur Folge. Dennoch bietet sich bei sehr kleinen Strahldurchmessern und entsprechender Größe der betroffenen Optik oft ausreichend Spielraum, um viele unterschiedliche Positionen anfahren zu können und somit die Lebenszeit der Optik um ein vielfaches zu erhöhen. Dies wird am konkreten Beispiel der großflächigen Beleuchtung einer mikroskopischen Probe verdeutlicht. Das kritische Bauteil ist in diesem Fall das Objektiv. Es gibt verschiedene typische Beleuchtungsarten, beispielsweise die Epifluoreszenzbeleuchtung. Hier wird das Anregungslicht in das Zentrum der hinteren Fokalebene fokussiert. Dies hat zur Folge, dass das Licht kollimiert aus dem Zentrum des Objektivs austritt und in der Probe einen großen Bereich beleuchtet. Wird nun der Beleuchtungsstrahlengang leicht versetzt, tritt das Licht unter einem bestimmten Winkel aus dem Objektiv aus. Dieser Winkel wird umso größer, je weiter man den Strahl vom Zentrum der Objektivapertur entfernt.

In der Praxis ist es für viele Proben jedoch völlig irrelevant, ob sie nun von einem senkrechten oder einem leicht schrägen Strahl durchleuchtet werden. Oftmals sind Proben nämlich sehr flach (z.B. Zellen auf Deckgläsern), so dass ein gewisser Winkel gar keine Rolle spielt. Tritt Licht unter einem von der Senkrechten, d.h. dem Verlauf der optischen Objektivachse leicht abweichenden Winkel auf die Probe, wird die Probe quasi identisch zur senkrechten Beleuchtung beleuchtet, obgleich im Objektiv selber eine andere Stellen bestrahlt wird. Insbesondere in der in der oben beschriebenen Mikroskopietechnik arbeitet man vor allem mit flachen Proben, da man bei dickeren Proben ohnehin das Problem hätte, nicht erwünschtes Hintergrundsignal zu erhalten. Insofern stehen zahlreiche mögliche alternative Beleuchtungsstrahlengänge zur Verfügung, die eine Vervielfachung der Objektivlebensdauer ermöglichen. Für alle Strahlengänge, die in das Objektiv innerhalb des Rings einfallen, ist die Ablenkung des Strahls in der Probe vernachlässigbar. Sie alle nehmen aber innerhalb des Objektivs unterschiedliche Wege.

Eine weitere Beleuchtungsart ist die TIRF-Beleuchtung, die bei der beschriebenen Mikroskopietechnik ebenfalls sehr beliebt ist. Hier wird der Beleuchtungsstrahlengang an den Rand der Objektivapertur gefahren. Nun ist der Austrittswinkel am Objektiv so groß, dass bei geeigneten Proben Totalreflexion auftritt und die Probe nur vom evaneszenten Feld beleuchtet wird. Somit lässt sich Hintergrundlicht ausblenden. Die Eindringtiefe des evaneszenten Lichtes hängt vom Winkel ab. Jedoch ergibt sich für alle Punkte, die auf einem Kreis mit einem bestimmten Radius um das Zentrum der Apertur liegen, der gleiche Austrittswinkel. Insofern können zahlreiche Punkte auf diesem Kreis angefahren werden, ohne dass sich die Eindringtiefe in der Probe ändert. Zudem ist hier ein weiterer Effekt von zusätzlichem Nutzen: Auch der TIRF-Effekt ist sehr nichtlinear. D.h. die Totalreflexion und damit der TIRF-Effekt setzen plötzlich ein und die Änderung der Eindringtiefe mit Änderung des Winkels ist dann vergleichsweise gering und bei vielen Anwendungen nicht primär von Wichtigkeit. Es ist hauptsächlich wichtig, dass überhaupt eine TIRF-Effekt erreicht wird. Ob die Eindringtiefe dann 90nm oder 200nm beträgt ist bei vielen Anwendungen sekundär. Je nach Wichtigkeit bzgl. einer spezifischen Eindringtiefe können somit auch Bereiche mit einem kleineren oder größeren Radius angefahren werden und dennoch ein TIRF-Effekt erhalten bleiben. Somit stehen viele weitere Stellen im Objektiv zur Verfügung, die alternative Strahlengänge bieten.

Aus den obigen Erläuterungen lässt sich erkennen, dass durch die beschriebene Methodik gerade in der beispielhaften Anwendung eine drastische Erhöhung der Lebenszeit eines Objektivs erreicht werden kann, ohne dass die Funktionalität des Mikroskops merklich eingeschränkt werden.

In den oben beschriebenen Anwendungen, gerade in der Weitfeld-Mikroskopie mit Epifluoreszenz- oder TIRF-Beleuchtung, ist in der Regel bereits eine Optik, Akustooptik oder Optomechanik vorgesehen, die es erlaubt, den Beleuchtungsstrahl im Hinblick auf die nötigen Austrittwinkel für einen TIRF-Effekt bzw. für eine Epifluoreszenzbeleuchtung zu manipulieren. Diese Optomechanik kann dann auch verwendet werden, um kleine Strahlversatzweiten zu erreichen, welche die oben beschriebene Wirkung erzielen. Der Strahlversatz kann nach verschiedenen Mustern erfolgen, beispielsweise kann der Strahl nach einem vorher festgelegten Muster in geeigneten zeitlichen Abständen automatisch immer wieder andere Punkte auf dem Objektiv anfahren. Es kann auch z.B. eine zufallsgeneratorgesteuerte Anfahrt erfolgen, die z.B. bei jeder Messung oder nach einem anderen geeigneten Zeitpunkt einen zufälligen anderen Punkt im Objektiv beleuchtet. Somit wird über einen großen Zeitraum eine gleichmäßige Strahlenbelastung des Objektivs erreicht. Die angefahrenen Punkte sollten in einem Bereich liegen, der bzgl. der unerwünschten optischen Abweichung zum Idealfall noch tolerabel ist.

Den geeigneten Zeitpunkt für die Anfahrt eines neuen Punktes kann man auf verschiedene Weise feststellen. Einerseits kann nach relativ kurzen Zeiträumen die Position gewechselt werden, aber im Laufe der Lebenszeit des Objektivs jede Position mehrfach angefahren werden. So wird das Objektiv über einen längeren Zeitraum gesehen gleichmäßig bestrahlt, was wünschenswert ist.

Andererseits kann auch jede Position bis kurz vor dem Erreichen der zerstörenden Strahlendosis beleuchtet werden und dann eine andere Position angefahren werden. Der Zeitpunkt des Erreichens der zerstörenden Strahlendosis kann verschiedentlich ermittelt werden, beispielsweise können Testmessungen die übliche Dosis ermitteln. Es sollte dann jeder Punkt entsprechend weit unterhalb der Zerstörschwelle beleuchtet werden, damit das Objektiv nicht früher als nötig Schaden nimmt.

Als eine andere Alternative kann das Erreichen der Zerstörschwelle auch durch Messungen während der Bestrahlung ermittelt werden. Wie schon erwähnt, lässt sich die Veränderung der Optik unter Strahleneinfluss mit hinreichend genauen Messgeräten bestimmen, z.B. in dem die Transmission der Optik punktuell geringfügig abnimmt. Diese Transmission kann während der Messungen überwacht werden und ab einer bestimmten Grenztransmission, die kurz vor der Zerstörschwelle liegt, kann dann der Beleuchtungspunkt gewechselt werden.

Die Erfindung wird nachfolgend näher anhand bevorzugter Ausführungsbeispiele der Erfindung unter Bezugnahme auf die Zeichnung erläutert. In der Zeichnung zeigen:
- Figur 1: eine schematische Darstellung eines erfindungsgemäßen Mikroskops ohne seitlichen Versatz des Beleuchtungslicht-Strahlengangs relativ zur optischen Achse des Objektivs.
- Figur 2: eine schematische Darstellung eines erfindungsgemäßen Mikroskops mit seitlichem Versatz des Beleuchtungslicht-Strahlengangs relativ zu optischen Achse des Objektivs.
- Figur 3: eine in Figur 4 mit Y-Z bezeichnete Schnittdarstellung des Objektivs mit unterschiedlichen Beleuchtungslicht-Strahlengängen A, B, C.
- Figur 4: eine in Figur 3 mit X bezeichnete Draufsicht auf das Objektiv mit unterschiedlichen Beleuchtungslicht-Strahlengängen A, B, C.
- Figur 5: eine Seitenansicht eines Objekts und Objektträgers mit zwei unterschiedlichen Beleuchtungslicht-Strahlengängen A und B.
- Figur 6: eine Seitenansicht eines Objekts und Objektträgers mit zwei unterschiedlichen Beleuchtungslicht-Strahlengängen A und C, wobei der BeleuchtungslichtStrahlengang C den Sonderfall einer TIRF-Beleuchtung demonstriert.

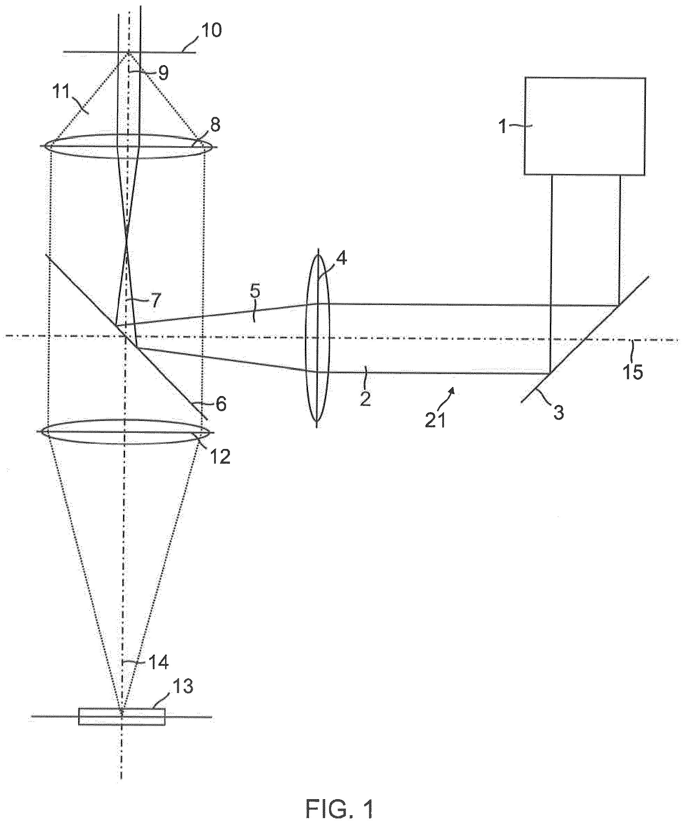

Figur 1 zeigt schematisch ein Mikroskop, in welches als einen Bestandteil das erfindungsgemäße Weitfeld-Mikroskop-Beleuchtungssystem eingebaut ist. Zum Zweck der deutlicheren Darstellung weicht die schematische Darstellung relativ weit von den tatsächlichen Maßstäben ab. Der gezeigte grundsätzliche Aufbau des Mikroskops ist der eines invertierten Mikroskops in welchem sich die Probe oben befindet, und der Beleuchtungsstrahl von unten nach oben gesendet wird, um oben auf die Probe zu treffen und diese auszuleuchten. Es versteht sich, dass auch ein herkömmlicher Aufbau mit unten befindlicher Probe und oben befindlichem Detektor verwendet werden kann. Eine Lichtquelle 1, beispielsweise ein Laser, sendet ein erstes Strahlenbündel 2 in eine Beleuchtungslichtstrahlengang-Manipulationseinrichtung 21, zum Beispiel bestehend aus einem kippbaren Spiegel 3 und einer Linse 4. Das aus der Beleuchtungslichtstrahlengang-Manipulationseinrichtung 21 austretende Strahlenbündel 5 wird an einem dichroitischen Spiegel 6 in Form eines konvergierenden Strahlenbündels 7 zu dem Objektiv 8 reflektiert, welches hier der Einfachheit halber als eine einfache Linse dargestellt ist. Das Objektiv 8 kollimiert das Strahlenbündel und sendet dieses als ein kollimiertes Strahlenbündel 9 in die Objektebene 10. Von hier aus wird das zu detektierende Detektionslicht 11 von dem hier nicht dargestellten Objekt ausgesendet. Hier ist nur beispielhaft das von einem Punkt des Objektes ausgehende Detektionslicht 11 dargestellt. Natürlich kann das Objekt auch an allen anderen beleuchteten Punkten Licht emittieren. Das zu detektierende Licht passiert das Objektiv 8 und den in Richtung des Detektionsstrahlengangs durchlässigen dichroitischen Spiegel 6 und wird von einer Tubuslinse 12 auf einen Detektor 13 gelenkt, welcher eine Ortszuweisung für die empfangenen Lichtintensitäten zulässt. Beispiele für derartige ortszuweisende Detektoren sind CCD Kameras oder CMOS Kameras. Wie aus der Darstellung gemäß Figur 1 erkennen ist, fokussiert das Objektiv 8 im Zusammenspiel mit der Tubuslinse 12 das Detektionslicht auf den Detektor 13.

Strichpunktiert sind eine optische Objektivachse 14 und eine zusätzliche Symmetrieachse 15 der Beleuchtungslicht-Manipulationseinrichtung 21 dargestellt. Gemäß der Darstellung in Figur 1 wurde von der Beleuchtungslichtstrahlengang-Manipulationseinrichtung 21 kein seitlicher Versatz für den Beleuchtungslicht-Strahlengang eingestellt, das heißt der BeleuchtungslichtStrahlengang wird entlang der optischen Objektivachse 14 in das Objektiv 8 gesendet, oder in anderen Worten, die Symmetrieachse des Beleuchtungslicht-Strahlengangs fällt mit der optischen Objektivachse 14 zusammen. Dies ist der Sonderfall der Epifluoreszenzbeleuchtung, bei welcher das Beleuchtungslicht üblicherweise zentral durch das Objektiv 8 gesendet wird.

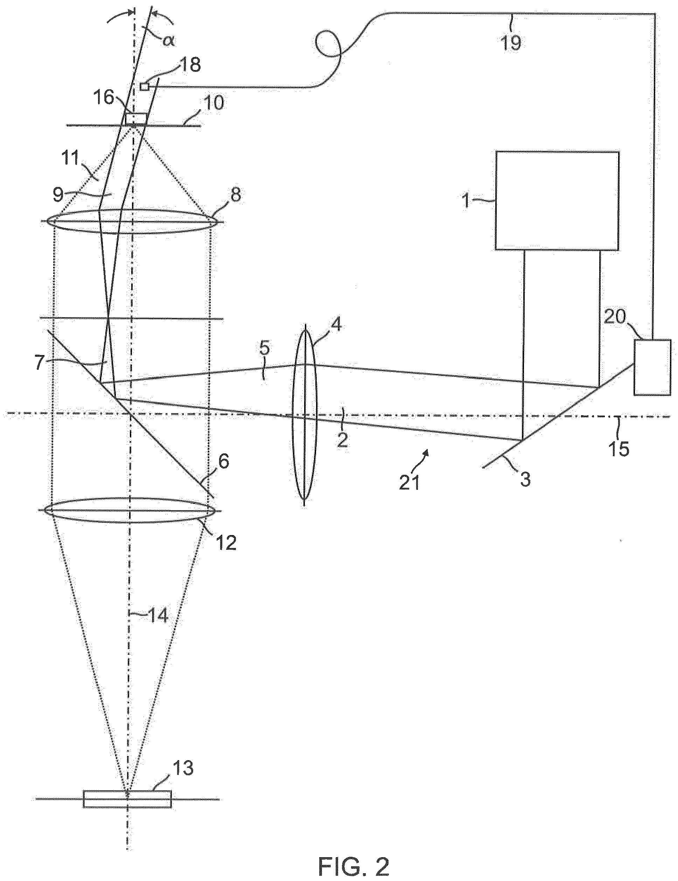

Figur 2 zeigt eine ähnliche Darstellung wie Figur 1, immer noch mit zur Verdeutlichung von der Wirklichkeit stark abweichenden Maßstäben. Hier wird der seitliche Versatz des Beleuchtungslicht-Strahlenbündels 7 verdeutlicht, dessen Symmetrieachse seitlich versetzt zur optischen Objektivachse 14 verläuft. Zu diesem Zweck erhielt die Beleuchtungslichtstrahlengang-Manipulationseinrichtung 21 einen Steuerbefehl, worauf hin die Beleuchtungslichtstrahlengang-Manipulationseinrichtung 21 den darin enthaltenen Spiegel 3 kippt, so dass der von der Lichtquelle 1 stammende Strahlenbündel 2 in seiner Richtung so geändert wird, dass er nach der Linse 4 der Beleuchtungslichtstrahlengang-Manipulationseinrichtung 21 seitlich versetzt und konvergent ist, was durch das aus der Beleuchtungslichtstrahlengang-Manipulationseinrichtung austretende Strahlenbündel 5 gezeigt ist. Ein Verkippen des Spiegels 3 kann in zwei verschieden Kipprichtungen erfolgen, d.h. innerhalb der Zeichenebene, und aus der Zeichenebene heraus bzw. hinein. Durch 2 Kipprichtungen lassen sich beliebige Punkte auf der Objektivfläche anfahren. Als eine preisgünstige Lösung lässt sich auch nur eine Kipprichtung verwirklichen, wodurch der Beleuchtungsstrahl nur längs einer Linie seitlich zur optischen Objektivachse versetzt werden kann.

Dieser seitliche Versatz des konvergenten Strahlenbündels 5 setzt sich nach der Reflexion am Spiegel 6 fort und führt nach Durchlaufen des Objektivs 8 dazu, dass das aus dem Objektiv 8 austretende Beleuchtungslicht-Strahlenbündel 9 kollimiert ist und einen Winkel α zur optischen Objektivachse 14 aufweist. Dieser Winkel α ist jedoch für die wirksame Ausleuchtung des Objekts 16 vernachlässigbar klein. Von dem Objekt 16 wird das Detektionslicht 11 ausgesendet. Zum Zweck der klareren Darstellung ist hier wie in Figur 1 beispielhaft nur das von einem Punkt des Objekts 16 ausgesendete Licht dargestellt. Es versteht sich, dass in Wirklichkeit mehrere Punkte des Objekts 16 Licht ausstrahlen. Dieses kann eine Mischung aus dem gewünschten Fluoreszenzlicht sowie von der Probe reflektiertem und gestreutem Licht sein. Es wird von dem Objektiv 8 im Zusammenspiel mit der Tubuslinse 12 auf den Detektor 13 fokussiert. Weil für die meisten Anwendungen, zumindest für die Anwendung in der Lokalisierungsmikroskopie, hauptsächlich das in alle Richtungen ausgestrahlte Fluoreszenzlicht detektiert werden soll und von dem Objekt reflektiertes und gestreutes Licht für die meisten Anwendungen sogar durch einen Farbfilter geblockt wird, ist der Winkel, in welchem das Beleuchtungslicht auf dem Objekt 16 auftrifft, besonders zu vernachlässigen, weil der Einfluss dieses Winkels auf die Reflexionsrichtung die Auswertung nicht beeinflusst, wenn das reflektierte Licht ohnehin geblockt wird und nur das in ohnehin in alle Richtungen emittierte Fluoreszenzlicht detektiert wird.

In der Wirklichkeit weist das in das Objektiv 8 eindringende Beleuchtungslicht-Strahlenbündel 7 einen noch kleineren Querschnitt im Verhältnis zur Objektivfläche auf, als in Figur 2 dargestellt ist, das heißt es wird nur ein kleiner Prozentsatz der Apertur bzw. der Objektivfläche ausgenutzt.

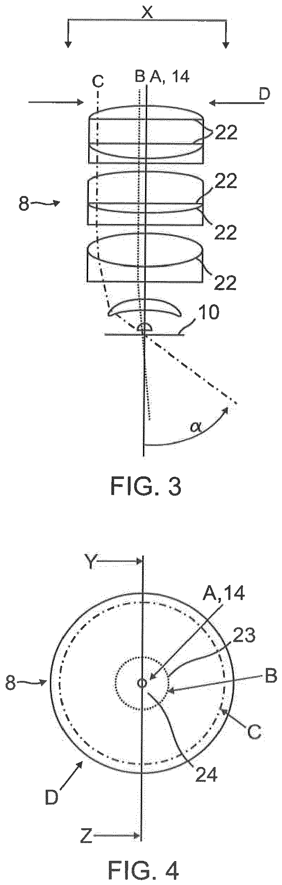

In Figur 3 ist ein Beispiel für ein Objektiv 8 dargestellt, welches in Figuren 1 und 2 der Einfachheit halber lediglich als einfache Linse dargestellt war. Figur 3 stellt eine Schnittdarstellung gemäß dem in Figur 4 mit Y-Z bezeichneten Schnitt in schematischer Darstellung dar. Anstatt aus einer einfachen Linse bestehen in Wirklichkeit Objektive typischerweise aus einer mehrere Linsen aufweisenden Linsenanordnungen, welche häufig zumindest teilweise mit optischem Kitt miteinander verbunden sind. Typische Kittflächen sind in Figur 3 mit dem Bezugszeichen 22 bezeichnet. Wie eingangs erwähnt sind diese Kittflächen 22 besonders empfindlich hinsichtlich zu hoher Strahlenbelastung über einen zu langen Zeitraum.

In der Darstellung gemäß Figur 3 sind drei verschiedene Strahlengänge dargestellt. Ein erster Strahlengang A ist mit der optischen Objektivachse identisch, ein zweiter Strahlengang B ist zur optischen Objektivachse etwas versetzt anordnet, und ein dritter Strahlengang C ist weit relativ zu der optischen Objektivachse 14 versetzt. Die Apertur ist mit D bezeichnet. Figur 4 stellt eine Draufsicht auf das Objektiv 8 dar. Diese Draufsicht ist in Figur 3 mit X bezeichnet.

Es versteht sich, dass längs der Strahlengänge A, B, C, welche in Fig. 3 nur durch ihren jeweiligen Beleuchtungsachsen dargestellt sind, in Wirklichkeit Strahlenbündel mit einem bestimmten Querschnitt in das Objektiv 8 gesendet und von diesem kollimiert werden, wie bereits anhand von Figur 1 und 2 dargestellt und erläutert wurde. Dies ist deshalb erforderlich, weil es sich um eine Weitfeld-Beleuchtung handelt, gemäß welcher das betrachtete Feld in der Objektebene 10 ausgeleuchtet wird.

Wie man aus Figur 3 deutlich erkennen kann, trifft das Beleuchtungslicht in einem umso größeren Winkel α in der Objektebenen 10 ein, je weiter der Beleuchtungslicht-Strahlengang A, B, C seitlich zur optischen Objektivachse versetzt ist. Gemäß dem Beleuchtungslicht-Strahlengang B trifft das Beleuchtungslicht nur in einem sehr gering von der optischen Achse abweichenden Austrittswinkel aus dem Objektiv 8 in der Objektebene 10 ein. Die ausgeleuchtete Probe strahlt in alle Richtungen Licht aus, einerseits Fluoreszenzlicht, andererseits reflektiertes und gestreutes Licht. Für Lokalisierungsmikroskope ist besonders das Fluoreszenzlicht von Interesse, welches beispielsweise mit einem Farbfilter aus dem gesamten Detektionslicht herausgefiltert werden kann, bevor der Detektionsstrahl auf den ortszuweisenden Detektor 13 (Siehe Figur 2) gesendet wird.

Wie aus Figur 4 deutlich wird, eröffnet aber auch ein kleiner paralleler Versatz des Beleuchtungslicht-Strahlengangs B eine Mehrzahl von Beleuchtungslicht-Eintrittsstellen, nämlich in Form eines Kreisrings 23, welcher sich konzentrisch um die optische Objektivachse 14 erstreckt. Es versteht sich, dass wenn ein Versatz gemäß Strahlengang B noch zulässig ist, auch kleinere Versätze zulässig sind, weil diese zu kleineren Abweichwinkeln α führen. Somit ergibt sich eine zulässige Beleuchtungslicht-Eintrittsfläche 24 auf dem Objektiv 8, welche vorbestimmbar ist und je nach Anwendung auch durch ein Steuersignal geändert werden kann.

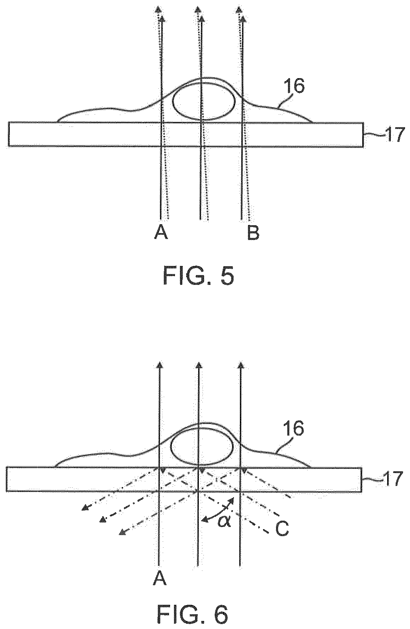

Eine weitere, besondere Anwendung der Erfindung ist in den Figuren 5 und 6 schematisch dargestellt. Auch in diesem Ausführungsbeispiel verläuft der Beleuchtungs-Strahlengang von unten nach oben, wie es beispielsweise in einem invertierten Mikroskop der Fall ist. Das Objekt 16 kann beispielsweise eine Zelle sein, welche auf einem Deckglas 17 anordnet ist. Mehrere Strahlen gemäß der Strahlengänge A und B, wie diese beispielsweise in den Figuren 3 und 4 erläutert wurden, sind auch in dieser Zeichnung dargestellt, wobei der Strahlengang B auf einem leichten Versatz relativ zu optischen Objektivachse beruht. Dass es sich um Weitfeld-Beleuchtung handelt, wurde in dieser Darstellung gemäß Figur 5 dadurch Rechnung getragen, dass mehrere Strahlen gemäß der Strahlengänge A und B dargestellt sind, nicht nur die Beleuchtungsachsen der Strahlengänge A, B und C wie diese in Figur 3 dargestellt sind. Wie zu erkennen ist, ist für die Ausleuchtung des Objekts 16 ein leicht von der Epifluoreszenzbeleuchtung abweichender Winkel in der Praxis vernachlässigbar.

Gemäß Figur 6 ist der Strahlengang C, ebenfalls mit mehreren Strahlen entsprechend der Weitfeld-Beleuchtung, mit einem großen von der optischen Achse abweichenden Winkel dargestellt, wie er sich bei einem großen Versatz der Beleuchtungslicht-Eintrittsstelle zur optischen Achse des Objektivs einstellt, wie dies in den Figuren 3 und 4 dargestellt wurde. Dieser Sonderfall eines großen Winkels α kann für die sogenannte TIRF-Beleuchtung verwendet werden. Für diese Art der Beleuchtung nutzt man den Effekt der Totalreflexion an der Grenzfläche der Medien aus, was in diesem Fall voraussetzt, dass der Brechungsindex des Objekts 16, hier einer Zelle, kleiner ist als der Brechungsindex des Objektträgers, hier der Brechungsindex von dem Deckglas 17. Bei einem großen Winkel α tritt dann Totalreflexion an der Grenzfläche zwischen dem Deckglas 17 und dem Objekt 16 auf. Eine Ausleuchtung des Objekts 16 tritt aber auch in diesem Fall dennoch auf, allerdings nur im evaneszenten Feld. Hieraus ergibt sich eine weitere Anwendung der Erfindung, nämlich die Möglichkeit einer Umschaltung zwischen normaler Ausleuchtung der Probe und einer TIRF-Beleuchtung. Für diese Umschaltung muss lediglich ein Steuerbefehl an die Steuerung 20 (Siehe Fig. 2) gegeben werden, mit welchem die vorbestimmte Beleuchtungslicht-Eintrittsfläche geändert wird. Der theoretisch maximal mögliche Versatz zwischen der optischen Objektivachse und der Beleuchtungslicht-Eintrittsstelle wird durch die Apertur D bestimmt. Da der Winkel α umso größer wird je größer der Versatz ist, ist der Winkel α kleiner, je kleiner der Versatz ist. Für die TIRF-Beleuchtung darf jedoch der Winkel α nicht unter den jeweiligen Winkel fallen, bei welchem Totalreflexion auftritt. Die vorbestimmte Beleuchtungslicht-Eintrittsfläche, welche die für TIRF-Beleuchtung zulässigen Beleuchtungslicht-Eintrittsstellen definiert, gestaltet sich daher als eine kreisringförmige Fläche. Hingegen kann die für die normale Ausleuchtung zulässige, vorbestimmte Beleuchtungslicht-Eintrittsfläche 24 eine Kreisfläche sein (siehe Fig. 4), welche von der kreisringförmigen, vorbestimmten TIRF-Beleuchtungslicht-Eintrittsfläche umschlossenen wird.

Innerhalb der für die jeweiligen Anwendungen zulässige, vorbestimmte Beleuchtungslicht-Eintrittflächen werden die Beleuchtungslicht-Eintrittsstellen automatisch verändert, wobei die Veränderung der zeitlichen Eintrittsstellen durch einen Zufallsgenerator erfolgt, welcher Bestandteil der Steuerung 20 ist. Hierbei kann die Veränderung in fest vorgegebenen Zeitintervallen, aber auch in Abhängigkeit von Messsignalen erfolgen, beispielsweise wie in Figur 2 dargestellt ist, durch Messung der Transmission des Objektivs 8 mit einer Messeinrichtung 18, welche über eine Signalleitung 19 ein Signal an einer Steuerung 20 geben kann, und die Beleuchtungslicht-Eintrittsstelle dann geändert wird, wenn die Transmission unter einen bestimmten Grenzwert fällt. Andere Kriterien für eine Änderung der Beleuchtungslicht-Eintrittsstelle in Abhängigkeit von der Zeit kann die Strahlenbelastung sein, welche sich aus dem Produkt von Strahlenintensität und Zeit für die jeweilige Beleuchtungslicht-Eintrittsstelle ergibt.

### Bezugszeichenliste

- 1: Lichtquelle
- 2: Strahlenbündel
- 3: Spiegel
- 4: Linse
- 5: Strahlenbündel (aus der Beleuchtungslichtstrahlengang-Manipulationseinrichtung austretend)
- 6: dichroitischer Spiegel
- 7: Strahlenbündel (konvergierend, von dem dichroitischen Spiegel reflektiert)
- 8: Objektiv
- 9: Strahlenbündel (aus dem Objektiv als kollimiertes Beleuchtungslicht austretend)
- 10: Objektebene
- 11: Detektionslicht
- 12: Tubuslinse
- 13: Detektor
- 14: optische Objektivachse
- 15: zusätzliche Symmetrieachse
- 16: Objekt
- 17: Deckglas
- 18: Messeinrichtung
- 19: Signalleitung
- 20: Steuerung
- 21: Beleuchtungslichtstrahlengang-Manipulationseinrichtung
- 22: Kittflächen
- 23: Kreisring
- 24: zulässige Beleuchtungslicht-Eintrittsfläche

## Patentansprüche

1. Verwendung eines Weitfeld-Mikroskop-Beleuchtungssystems mit:
einem Mikroskopobjektiv (8), welches eine optische Objektivachse (14) aufweist;
einer Beleuchtungslichtquelle (1), welche Weitfeld-Beleuchtungslicht längs von Beleuchtungsstrahlengängen (A,B,C) mit entsprechenden Beleuchtungsachsen sendet, längs welcher das Beleuchtungslicht durch innerhalb einer vorbestimmten Beleuchtungslicht-Eintrittsfläche (24) liegende Beleuchtungslicht-Eintrittsstellen in das Mikroskopobjektiv (8) eindringt;
einem räumlich auflösenden Lichtdetektor (13), welcher von einer beleuchteten Probe durch das Mikroskopobjektiv (8) entlang eines Detektionslichtstrahlengangs gesendetes Detektionslicht (11) detektiert; und
einer von einer Steuerung (20) gesteuerten, automatischen Beleuchtungslichtstrahlengang-Manipulationseinrichtung (21), welche in Richtung des Beleuchtungslicht-Strahlengangs vor dem Mikroskopobjektiv (8) angeordnet ist und welche derart angesteuert wird, dass die Beleuchtungsachsen automatisch in zeitlichen Abständen zu einer Mehrzahl von Beleuchtungslicht-Eintrittsstellen bewegt werden, wobei die Steuerung (20) einen Zufallsgenerator aufweist, welcher einen zugelassenen verstellbaren Strahlenversatz im Bereich der vorbestimmten Beleuchtungslicht-Eintrittsfläche (24) für das Beleuchtungslicht in das Objektiv (8) steuert, wobei alle von der Steuerung (20) zugelassenen Beleuchtungslicht-Eintrittsstellen innerhalb dieser vorbestimmten Beleuchtungslicht-Eintrittsfläche (24) liegen,
zum Schutz des Mikroskopsobjektivs (8) vor einer Schädigung durch das Beleuchtungslicht.

2. Verwendung nach Anspruch 1, **dadurch gekennzeichnet, dass** die Beleuchtungsachsen stets parallel zur Objektivachse (14) verlaufen.

3. Verwendung nach Anspruch 1, **dadurch gekennzeichnet, dass** das Weitfeld-Mikroskop-Beleuchtungssystem Bestandteil eines Lokalisierungsmikroskops ist oder dass das Mikroskop-Beleuchtungssystem Bestandteil eines TIRF-Beleuchtungssystems ist.

4. Verwendung nach einem der Ansprüche 1-3, **dadurch gekennzeichnet, dass** die Beleuchtungslichtstrahlengang-Manipulationseinrichtung (21) eine Optomechanik, Akustooptische Modulatoren (AOM) oder Elektrooptische Modulatoren (EOM) aufweist, welche einen verstellbaren Strahlenversatz und somit eine im Verhältnis zu optischen Objektivachse (14) verstellbare Beleuchtungslicht-Eintrittsstelle einstellen.

5. Verwendung eines Mikroskop-Beleuchtungssystems nach einem der Ansprüche 1-4, **dadurch gekennzeichnet, dass** die vorbestimmte Beleuchtungslicht-Eintrittsfläche (24) eine kreisförmige, kreissegmentförmige, ringförmige oder ringsegmentförmige Fläche ist.

6. Verwendung nach einem der Ansprüche 1-5, **gekennzeichnet durch** eine Messeinrichtung (18), welche eine Transmission des Objektivs (8) überwacht und ein Steuersignal an die Steuerung (20) sendet, wenn die Transmission unter einen vorbestimmten Grenzwert fällt.

7. Weitfeld-Mikroskop-Beleuchtungssystem mit:
einem Mikroskopobjektiv (8), welches eine optische Objektivachse (14) aufweist;
einer Beleuchtungslichtquelle (1), welche Weitfeld-Beleuchtungslicht längs von Beleuchtungsstrahlengängen (A,B,C) mit entsprechenden Beleuchtungsachsen sendet, längs welcher das Beleuchtungslicht durch innerhalb einer vorbestimmten Beleuchtungslicht-Eintrittsfläche (24) liegende Beleuchtungslicht-Eintrittsstellen in das Mikroskopobjektiv (8) eindringt;
einem räumlich auflösenden Lichtdetektor (13), welcher von einer beleuchteten Probe durch das Mikroskopobjektiv (8) entlang eines Detektionslichtstrahlengangs gesendetes Detektionslicht (11) detektiert; und
einer von einer Steuerung (20) gesteuerten, automatischen Beleuchtungslichtstrahlengang-Manipulationseinrichtung (21), welche in Richtung des Beleuchtungslicht-Strahlengangs vor dem Mikroskopobjektiv (8) angeordnet ist und welche derart angesteuert wird, dass die Beleuchtungsachsen automatisch in zeitlichen Abständen zu einer Mehrzahl von Beleuchtungslicht-Eintrittsstellen bewegt werden, wobei die Steuerung (20) einen Zufallsgenerator aufweist, welcher einen zugelassenen verstellbaren Strahlenversatz im Bereich der vorbestimmten Beleuchtungslicht-Eintrittsfläche (24) für das Beleuchtungslicht in das Objektiv (8) steuert, wobei alle von der Steuerung (20) zugelassenen Beleuchtungslicht-Eintrittsstellen innerhalb dieser vorbestimmten Beleuchtungslicht-Eintrittsfläche (24) liegen.

8. Weitfeld-Beleuchtungsverfahren zur Beleuchtung von mit einem Mikroskop betrachteten Proben, wobei das Mikroskop versehen ist mit:
einem Mikroskopobjektiv, welches eine optische Objektivachse aufweist; und
einer Beleuchtungslichtquelle, welche Weitfeld-Beleuchtungslicht längs von Beleuchtungsstrahlengängen mit entsprechenden Beleuchtungsachsen sendet, längs welcher das Beleuchtungslicht durch innerhalb einer vorbestimmten Beleuchtungslicht-Eintrittsfläche liegende Beleuchtungslicht-Eintrittsstellen in das Mikroskopobjektiv eindringt; wobei
das Beleuchtungsverfahren versehen ist mit derartigem wiederholtem, automatischem, parallelem Verstellen der Beleuchtungsachse relativ zur optischen Objektivachse in zeitlichen Abständen, dass ein seitlicher Versatz der Beleuchtungsachse relativ zur Objektivachse automatisch verstellt wird, so dass die Beleuchtungslicht-Eintrittsstelle in zeitlichen Abständen innerhalb der vorbestimmten Beleuchtungslicht-Eintrittsfläche verstellt wird,
wobei die jeweiligen Beleuchtungslicht-Eintrittsstellen des Beleuchtungslichts innerhalb der vorgegebenen Beleuchtungslicht-Eintrittsfläche zufällig ausgewählt werden und diese jeweiligen Beleuchtungslicht-Eintrittsstellen über die jeweiligen zeitlichen Abstände beibehalten werden, bis die jeweilige nächste Beleuchtungslicht-Eintrittsstelle innerhalb der vorgegebenen Beleuchtungslicht-Eintrittsstellen zufällig ausgewählt wird.

9. Beleuchtungsverfahren nach Anspruch 8, **gekennzeichnet durch** ein paralleles Ausrichten der Beleuchtungsachsen relativ zu der Objektivachse und Beibehalten dieser Parallelität beim automatischen Verstellen des seitlichen Versatzes der Beleuchtungsachse relativ zur Objektivachse.

10. Beleuchtungsverfahren nach einem der Ansprüche 8 bis 9, **gekennzeichnet durch** ein Auswählen der vorgegebenen Beleuchtungslicht-Eintrittsfläche aus wenigstens zwei unterschiedlichen Beleuchtungslicht-Eintrittsflächen, welche unterschiedlichen Beleuchtungsmodi zugeordnet sind.

11. Beleuchtungsverfahren nach Anspruch 10, **dadurch gekennzeichnet, dass** die unterschiedlichen Beleuchtungsmodi Epifluoreszenzbeleuchtung und TIRF-Beleuchtung sind.

## Claims

1. Use of a wide field microscope illumination system with:
a microscope objective (8) having an optical objective axis (14);
an illumination light source (1) which transmits wide-field illumination light along illumination beam paths (A,B,C) having respective illumination axes along which the illumination light penetrates into the microscope objective (8) through illumination light entry points located within a predetermined illumination light entry surface (24);
a spatially resolving light detector (13) which detects detection light (11) transmitted from an illuminated sample through said microscope objective (8) along a detection light beam path; and
an automatic illumination light beam path manipulation device (21) which is controlled by a controller (20), is arranged in front of the microscope objective (8) in the direction of the illumination light beam path and is operated in such a way that the illumination axes are moved automatically at time intervals towards a plurality of illumination light entry points, wherein the controller (20) comprises a random generator which controls an allowable adjustable beam offset in the region of the predetermined illumination light entry surface (24) for the illumination light into the objective (8), wherein all illumination light entry points allowed by the controller (20) lie within said predetermined illumination light entry surface (24),
to protect the microscope objective (8) from damage by the illumination light.

2. Use according to Claim 1, **characterized in that** the illumination axes always run parallel to the objective axis (14).

3. Use according to claim 1, **characterized in that** the wide-field microscope illumination system is part of a localization microscope, or
that the microscope illumination system is part of a TIRF illumination system.

4. Use according to any one of claims 1-3, **characterized in that** the illumination light beam path manipulation device (21) comprises an optomechanism, acoustic-optical modulators (AOM) or electro-optical modulators (EOM) which set an adjustable beam offset and thus an illumination light entry point which is adjustable in relation to the optical objective axis (14).

5. Use of a microscope illumination system according to any one of claims 1-4, **characterized in that** the predetermined illumination light entry surface (24) is a circular, circular segment, annular or annular segment surface.

6. Use according to any one of claims 1-5, **characterized by** a measuring device (18) which monitors a transmission of the objective (8) and sends a control signal to the controller (20) when the transmission falls below a predetermined threshold.

7. Wide-field microscope illumination system with:
a microscope objective (8) comprising an optical objective axis (14);
an illumination light source (1) which transmits wide-field illumination light along illumination beam paths (A,B,C) having respective illumination axes along which the illumination light penetrates into the microscope objective (8) through illumination light entry points located within a predetermined illumination light entry surface (24);
a spatially resolving light detector (13) which detects detection light (11) transmitted from an illuminated sample through said microscope objective (8) along a detection light beam path; and
an automatic illumination light beam path manipulation device (21) which is controlled by a controller (20), is arranged in front of the microscope objective (8) in the direction of the illumination light beam path and is operated in such a way that the illumination axes are automatically moved at time intervals towards a plurality of illumination light entry points, wherein the controller (20) comprises a random generator which controls an allowable adjustable beam offset in the region of the predetermined illumination light entry surface (24) for the illumination light into the objective (8), wherein all illumination light entry points allowed by the controller (20) lie within said predetermined illumination light entry surface (24).

8. Wide-field illumination method for illuminating samples observed with a microscope, wherein the microscope is provided with:
a microscope objective comprising an optical objective axis; and
an illumination light source which transmits wide-field illumination light along illumination beam paths having respective illumination axes along which the illumination light penetrates into the microscope objective through illumination light entry points located within a predetermined illumination light entry surface; wherein
the illumination method is provided with such repeated, automatic, parallel adjustment of the illumination axis relative to the optical objective axis at time intervals that a lateral offset of the illumination axis relative to the objective axis is automatically adjusted so that the illumination light entry point is adjusted at time intervals within the predetermined illumination light entry surface,
wherein the respective illumination light entry points of the illumination light are randomly selected within the predetermined illumination light entry surface and these respective illumination light entry points are maintained over the respective time intervals until the respective next illumination light entry point within the predetermined illumination light entry points is randomly selected.

9. An illumination method according to claim 8 **characterized by** parallel aligning the illumination axes relative to the objective axis and maintaining said parallellity during automatic adjustment of the lateral offset of the illumination axis relative to the objective axis.

10. Illumination method according to any one of claims 8 to 9, **characterized by** selecting the predetermined illumination light entry surface from at least two different illumination light entry surfaces associated with different illumination modes.

11. Illumination method according to claim 10, **characterized in that** the different illumination modes are epifluorescence illumination and TIRF illumination.

## Revendications

1. Utilisation d'un système d'illumination de microscope à champ large avec :
un objectif de microscope (8) comprenant un axe d'objectif optique (14) ;
une source de lumière d'illumination (1) qui transmet de la lumière d'illumination à champ large le long de trajets optiques d'illumination (A, B, C) ayant des axes d'illumination respectifs le long desquels la lumière d'illumination traverse l'objectif (8) de microscope traversant des points d'entrée de lumière d'illumination situés dans une surface d'entrée de lumière d'illumination prédéterminée (24);
un détecteur de lumière à résolution spatiale (13) qui détecte la lumière de détection (11) transmise par un échantillon éclairé à travers ledit objectif de microscope (8) le long d'un trajet optique de lumière de détection ; et
un dispositif de manipulation automatique de trajet optique d'illumination (21) qui est commandé par un contrôleur (20), est disposé devant l'objectif de microscope (8) dans la direction du trajet optique d'illumination et est actionné de telle sorte que les axes d'illumination sont déplacés automatiquement à intervalles de temps vers une pluralité de points d'entrée de lumière d'illumination, dans laquelle le contrôleur (20) comprend un générateur aléatoire qui commande un décalage ajustable admissible de faisceau dans la région de la surface d'entrée de lumière d'illumination prédéterminée (24) pour la lumière d'illumination dans l'objectif (8), dans lequel tous les points d'entrée de lumière d'illumination admissible par le contrôleur (20) sont situés dans ladite surface d'entrée de lumière d'illumination prédéterminée (24),
pour protéger l'objectif du microscope (8) des dommages causés par la lumière d'illumination.

2. Utilisation selon la revendication 1, **caractérisée en ce que** les axes d'illumination sont toujours parallèles à l'axe d'objectif (14).

3. Utilisation selon la revendication 1, **caractérisée en ce que** le système d'illumination de microscope à champ large fait partie d'un microscope de localisation, ou
**que** le système d'illumination de microscope fait partie d'un système d'illumination TIRF.

4. Utilisation selon l'une quelconque des revendications 1 à 3, **caractérisée en ce que** le dispositif (21) de manipulation du trajet optique d'illumination comprend une optomécanique, des modulateurs acousto-optiques (AOM) ou des modulateurs électro-optiques (EOM) qui ajustent un décalage ajustable de faisceau et ainsi un point d'entrée de lumière d'illumination ajustable en relation avec l'axe d'objectif optique (14).

5. Utilisation d'un système d'illumination de microscope selon l'une quelconque des revendications 1 à 4, **caractérisée en ce que** la surface d'entrée de lumière d'illumination prédéterminée (24) est une zone de forme circulaire, de segment circulaire, annulaire, ou de segment annulaire.

6. Utilisation selon l'une des revendications 1 à 5, **caractérisée par** un dispositif de mesure (18) qui surveille une transmission de l'objectif (8) et envoie un signal de commande au contrôleur (20) lorsque la transmission tombe au-dessous d'une valeur de seuil prédéterminée.

7. Microscope à champ large avec :
un objectif de microscope (8) comprenant un axe d'objectif optique (14) ;
une source de lumière d'illumination (1) qui transmet de la lumière d'illumination à champ large le long de trajets optiques d'illumination (A, B, C) ayant des axes d'illumination respectifs le long desquels la lumière d'illumination traverse l'objectif (8) de microscope traversant des points d'entrée de lumière d'illumination situés dans une surface d'entrée de lumière d'illumination prédéterminée (24);
un détecteur de lumière à résolution spatiale (13) qui détecte la lumière de détection (11) transmise par un échantillon éclairé à travers ledit objectif de microscope (8) le long d'un trajet optique de lumière de détection ; et
un dispositif de manipulation automatique de trajet optique d'illumination (21) qui est commandé par un contrôleur (20), est disposé devant l'objectif de microscope (8) dans la direction du trajet optique d'illumination et est actionné de telle sorte que les axes d'illumination sont déplacés automatiquement à intervalles de temps vers une pluralité de points d'entrée de lumière d'illumination, dans laquelle le contrôleur (20) comprend un générateur aléatoire qui commande un décalage ajustable admissible de faisceau dans la région de la surface d'entrée de lumière d'illumination prédéterminée (24) pour la lumière d'illumination dans l'objectif (8), dans lequel tous les points d'entrée de lumière d'illumination admissible par le contrôleur (20) sont situés dans ladite surface d'entrée de lumière d'illumination prédéterminée (24).

8. Procédé d'illumination à grand champ pour illuminer des échantillons regardés avec un microscope, dans lequel le microscope est muni de :
un objectif de microscope (8) comprenant un axe d'objectif optique (14) ; et
une source de lumière d'illumination (1) qui transmet de la lumière d'illumination à champ large le long de trajets optiques d'illumination (A, B, C) ayant des axes d'illumination respectifs le long desquels la lumière d'illumination pénètre l'objectif (8) de microscope traversant des points d'entrée de lumière d'illumination situés dans une surface d'entrée de lumière d'illumination prédéterminée (24); dans lequel
le procédé d'illumination est pourvu d'un ajustage répété, automatique et parallèle de l'axe d'illumination relatif à l'axe d'objectif optique à des intervalles de temps tels qu'un décalage latéral de l'axe d'illumination relatif à l'axe d'objectif soit automatiquement ajusté afin que le point d'entrée de lumière d'illumination soit ajusté aux intervalles de temps dans la surface d'entrée de lumière d'illumination prédéterminée,
dans lequel les points respectifs d'entrée de lumière d'illumination de la lumière d'illumination sont choisis de manière aléatoire dans la surface d'entrée de lumière d'illumination prédéterminée et lesdits points respectifs d'entrée de lumière d'illumination sont maintenus pendant les intervalles respectifs jusqu'au point suivant respectif d'entrée de lumière d'illumination est sélectionné de manière aléatoire dans les points d'entrée de lumière d'illumination prédéterminés.

9. Procédé d'illumination selon la revendication 8, **caractérisé par** l'alignement parallèle des axes d'illumination en regard de l'axe de l'objectif et le maintien de ce parallélisme lors de l'ajustage automatique du décalage latéral de l'axe d'illumination en regard de l'axe d'objectif.

10. Procédé d'illumination selon l'une quelconque des revendications 8 à 9, **caractérisé par** une sélection de la surface d'entrée de lumière d'illumination prédéterminée parmi au moins deux surfaces d'entrée de lumière d'illumination différentes, associées à différents modes d'illumination.

11. Procédé d'illumination selon la revendication 10, **caractérisé en ce que** les différents modes d'illumination sont l'illumination par épifluorescence et l'illumination TIRF.
